# EUROPEAN PATENT SPECIFICATION

(11) **EP 2 862 191 B1**
(45) Date of publication and mention of the grant of the patent: **11.08.2021**
(21) Application number: 13806696.4
(22) Date of filing: 18.06.2013
(51) Int. Cl.: H01H 23/08, H01H 13/10, H01H 13/705, H01H 11/00, B60K 37/06, H01H 13/7057, H01H 23/14, H01H 23/16

(54) **SWITCH CONFIGURATION**
SCHALTERKONFIGURATION
CONFIGURATION DE COMMUTATEUR

(30) Priority: 19.06.2012 SE 1250652
(43) Date of publication of application: 22.04.2015
(73) Proprietor: Scania CV AB, 151 87 Södertälje (SE)
(72) Inventor: ULUSOY, Serdar, S-117 64 Stockholm (SE); SVENSSON, Emma, S-151 38 Södertälje (SE)
(74) Representative: Scania CV AB
(86) International application number: PCT/SE2013/050724
(87) International publication number: WO 2013/191635

(56) References cited:
- EP-A2- 1 061 540
- EP-A2- 2 194 552
- WO-A1-03/073455
- DE-A1- 3 816 155
- DE-U1-202005 011 033
- US-A- 3 342 967
- US-A- 5 558 211
- None

## Description

### TECHNICAL FIELD OF THE INVENTION

The invention concerns a switch configuration according to the preamble to claim 1, an example of which is disclosed in US-A-3342967.

### BACKGROUND

Instrument panels in vehicles contain a set of switches for activating various vehicle functions. Such switches consist of various types of function-dependent control devices, where the control devices comprise pushbutton switches in the form of pushbuttons that are depressed for activation, and toggle switches in the form of toggle buttons that toggle between their active and passive positions.

According to one variant, such sets of switches are arranged in a module unit that is intended to be arranged in the instrument panel, wherein the module unit contains functions for pushbutton switches in certain positions and for toggle switches in other positions. Desired functions vary among different vehicles, and in cases where, for example, no functions for toggle switches are present, they are covered over by means of protective covers and consequently take up space without offering any function.

### OBJECT OF THE INVENTION

One object of the invention is to achieve a switch configuration that is flexible, adaptable and cost-effective.

### SUMMARY OF THE INVENTION

These and other objects, which are presented in the description below, are achieved by means of a switch configuration of the type that is specified above, and that further exhibits the features specified in the characterizing part of accompanying independent claim 1. Preferred embodiments of the switch configuration are defined in accompanying dependent claims 2-8.

These objects are achieved according to the invention by means of a switch configuration according to claim 1. A flexible and adaptable switch configuration is hereby achieved insofar as all positions can be used for different functions with different types of control devices. This makes it possible to utilize many functions in a small area, thereby enabling space-efficient utilization of, for example, an instrument panel in a vehicle. This makes it possible to use the same unit for different functions, which leads to reduced component variety management and, in turn, greater cost-effectiveness.

According to one embodiment of the switch configuration, each respective activating device is controlled displaceably in said module part. This enables stable control of control devices with no risk of wobble, and consequently a favorable sensation when manipulating the control devices.

According to one embodiment of the switch configuration, said button part is designed as a cap arranged so as to be fastened on said activating device. This provides for efficient control of the button part.

According to one embodiment of the switch configuration, said toggle parts are articulated and rotatably connected around a shaft of rotation with said module part between said activating devices of the two adjacent switch units. This enables efficient control of the toggle button part.

According to one embodiment of the switch configuration, means are present to facilitate movements of said toggle button part transverse to the shaft of rotation of the toggle part. This provides a better sensation during manipulation, and consequently efficient control of the toggle button part. According to one embodiment of the switch configuration, said means comprise a friction-reducing configuration between said activating devices and the interior of the toggle button part. This provides a better sensation during manipulation, and consequently efficient control of the toggle button part.

According to one embodiment of the switch configuration, said friction-reducing configuration comprises rolling elements arranged on said activating devices. This provides a better sensation during manipulation, and consequently efficient control of the toggle button part.

According to one embodiment, the switch configuration comprises a module unit containing a plurality of pairs of adjacent switch units. This enables cost-effective installation in, for example, a vehicle instrument panel, wherein component variety management can be reduced in that different functions of switch units can be utilized in the same module unit.

### DESCRIPTION OF FIGURES

The present invention will be better understood with reference to the following detailed description read in conjunction with the accompanying drawings, in which the same reference designations refer to the same parts consistently in the multiple views, and wherein:
Fig. 1 schematically illustrates a perspective view of a switch configuration according to one embodiment of the present invention; and
Fig. 2 schematically illustrates a perspective view of a control device for push-actuation of activating devices in switch units in the switch configuration in Fig. 1.

### DESCRIPTION OF EMBODIMENTS

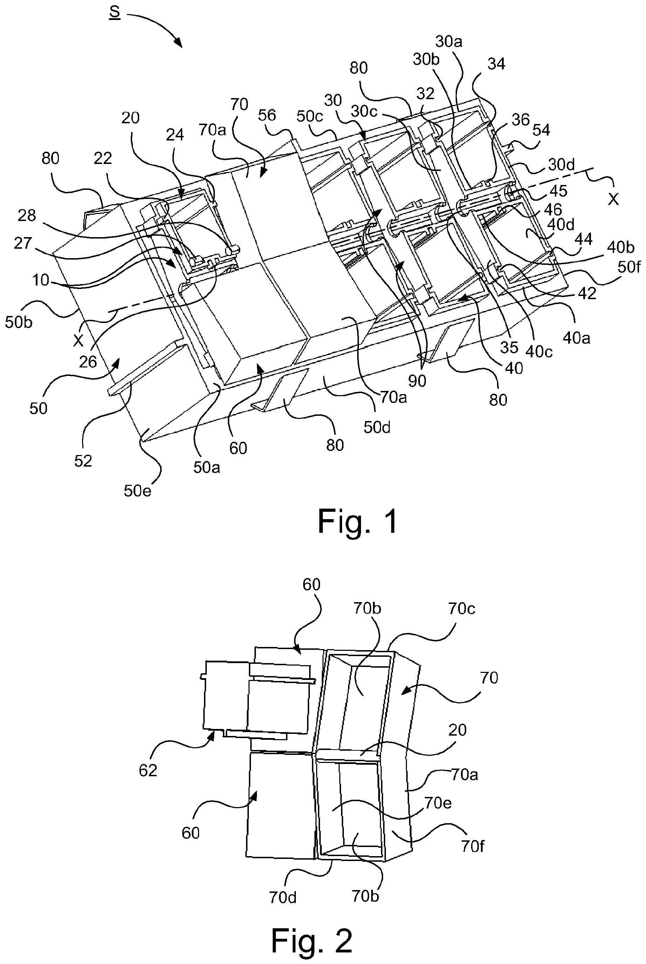

Fig. 1 schematically illustrates a perspective view of a switch configuration S according to one embodiment of the present invention, while Fig. 2 shows a perspective view of control devices for push-actuation of activating devices 20 in switch units 10 in the switch configuration S in Fig. 1.

The switch configuration S comprises a set of switch units 10, each of which is arranged so as to achieve a switch function. Each respective switch unit 10 comprises an activating device 20 arranged so as to perform said switch function. The switch configuration S comprises control devices 60, 70 arranged in connection to said activating device 20 so as to push-actuate said activating device 20.

Said switch configuration S comprises activating means arranged so as to be activated by means of said activating device 20. According to one embodiment, said activating means include electronic means, wherein said activating device is arranged so as to activate said electronics for said switch function. Said switch configuration S thus constitutes a circuit breaker configuration and said switch units 10 constitute circuit breaker units.

Said activating means can consist of any applicable means for activating by means of activating devices according to the present invention. According to one variant, said electronic means include an electronic control unit or, according to one variant, are contained in an electronic control unit.

The switch configuration S comprises a module unit 50 containing a plurality of pairs of adjacent switch units 10. Each respective switch unit 10 comprises a module part 30, 40. Each respective activating device 20 is displaceably arranged in a respective module part 30, 40. Said switch units 10 comprise upper switch units and adjacent lower switch units.

Each respective activating device 20 [is] controlled displaceably in said respective module part 30, 40 of the switch unit 10.

The module unit 50 according to this embodiment is box-shaped. The module unit 50 has an outer front side 50a, an inner side 50b that is arranged in opposition to and at a distance from the outer side 50a, and a top side 50c, an opposing bottom side 50d, and a left side 50 e and opposing right side 50 f, wherein said sides form said box shape.

Said module unit 50 has resilient securing elements 80 arranged on said top side 50c and bottom side 50d so as to secure said module unit 50 in a corresponding opening in an instrument panel of a vehicle (not shown). Said switch configuration S is consequently intended to be disposed in an instrument panel of a vehicle.

Said module unit 50 has projections 52, 54 that run along said left side 50e and right side 50f from the outer side 50a to the inner side 50b essentially perpendicular to the direction of extension of the outer side 50a, which projections are arranged so as to travel in corresponding grooves in an instrument panel of a vehicle in order to facilitate the fitting and application of the module unit 50.

Each respective module part 30, 40 contains a recess or opening arranged on said outer front side 50a. Said recess comprises walls 30a, 30b, 30c, 30d; 40a, 40b, 40c, 40d that run essentially perpendicular to said direction of extension of said outer side. Said walls form an essentially rectangular opening. Said walls are arranged so as to protrude from said outer side 50a. Each respective module part 30, 40 consequently has a rectangular section that protrudes from said outer front side 50a.

Said switch configuration S comprises a set of upper module parts 30 and a set of lower module parts 40, wherein each respective upper module part 30 is adjacent to a respective lower module part 40.

Each respective upper module part 30 has an upper wall part 30a arranged so as to run in connection to and parallel with the top side 50c of the module unit 50, and a lower wall part 30b arranged so as to run parallel with and at a distance from the upper wall part 30a in connection to a central area of the module unit 50.

Each respective upper module part 30 also has a left wall part 30c and a right wall part 30d that run at a distance from and parallel with the left wall part 30c.

Each respective lower module part 40 has a lower wall part 40a arranged so as to run in connection to and parallel with the underside of the module unit 50, and an upper wall part 40b arranged so as to run parallel with and at a distance from the lower wall part 40a in connection to a central area of the module unit 50 and facing toward the lower wall part 30b of the upper module part.

Each respective lower module part 40 also has a left wall part 40c and a right wall part 40d that run at a distance from and parallel with the left wall part 40c.

Each respective upper module part 30 and adjacent lower module part 40 forms a module element 90. Said left wall part 30c of each respective upper module part 30 is integrated with said left wall part 40c of an adjacent lower module part 40. Said right wall part 30d of each respective upper module part 30 is integrated with said right wall part 40d of an adjacent lower module part 40.

Between each upper and lower module part 30, 40 there is arranged an essentially arched recess 35, 45 in said left wall part 30c, 40c and right wall part 30d, 40d, wherein the arched recesses 35, 45 are aligned with one another by means of an imaginary axis X running between adjacent upper and lower activating devices 20 in the direction between the left side 50e and the right side 50f of the module unit 50. A toggle button is intended to be rotatably arranged so as to pivot around said imaginary axis X. The circumference of each respective arched recess 35, 45 consequently runs in the plane of the wall parts 30c, 40c, 30d, 40d.

Said module parts 30, 40 comprise grooves 32, 34, 36; 42, 44, 46 that run along said walls 30a, 30b, 30c, 30d; 40a, 40b, 40c, 40d and perpendicular to the direction of extension of said outer side 50a.

Each respective module part 30, 40 is arranged so as to support an activating device 20. Each respective activating device 20 is consequently arranged so as to be securely housed in a module part 30, 40. Each respective activating device 20 consequently has a shape that is arranged so as to fit into a module part 30, 40.

Each respective activating device 20 has walls along which projections 22, 24, 26 or flanges run, which projections 22, 24, 26 are intended to fit into said grooves 32, 34, 36; 42, 44, 46 of a module part 30, 40.

Each respective activating device 20 is arranged so as to be controlled displaceably in the module part 30, 40 through the interaction between said grooves 32, 34, 36; 42, 44, 46 of the module part 30, 40 and projections 22, 24, 26 of the activating device 20. Stable control of the control devices 60, 70 is achieved thereby without the risk of wobbling, and consequently a favorable sensation is achieved in connection with manipulation of the control devices.

Said upper module part 30 according to this embodiment has a groove 32 running along said left wall part 30c, a groove 34 running along said right wall part 30d, and a groove 36 running along said lower wall part 30b.

Said lower module part 40 according to this embodiment has a groove 42 running along said left wall part 30c, a groove 44 running along said right wall part 40d, and a groove 46 running along said upper wall part 40b.

Each respective activating device 20 consequently has a corresponding projection 22, 24, 26 for said fitting into respective module parts 30, 40.

The switch configuration S comprises a first type of control device 60. Said first type of control device consists of a button part 60 arranged on said activating device 20 to form a pushbutton. Said activating device 20 is consequently arranged so as to support said first type of control device 60 designed as a pushbutton.

Said button part 60 is designed as a button cap. Said button part 60 is arranged so as to be fastened to said activating device 20. Said button part comprises a fastening element 62 for said fastening on the activating device. Said fastening element 62 comprises a clip configuration according to one variant.

Said first type of control device 60 designed as a pushbutton can consist of any suitable type of pushbutton for a desired switch function, such as a non-locking pushbutton or a pushbutton that is manipulable between a depressed position and an non-depressed position and, where relevant, the intermediate positions.

The switch configuration S comprises a second type of control device 70. Said second type of control device 70 consists of a toggle button part 70 mounted on a module part 30, 40 to form a toggle button. Said module part 30, 40 is consequently arranged so as to support said second type of control device 70 designed as a toggle button. Said module unit 50 is consequently arranged so as to support said toggle button part 70.

Said second type of control device 70 designed as a toggle button can consist of any suitable type of toggle button for a desired switch function, such as a non-locking toggle button or a toggle button that is manipulable between a depressed position of an upper switch unit and a depressed position of a lower switch unit and, where relevant, an intermediate non-depressed position.

Said toggle button part 70 is articulated and rotatably connected around an shaft of rotation with said module part 30, 40 between said activating devices 20 of the two adjacent switch units 10.

According to one variant, said toggle button part 70 has an essentially flat outer side 70a and an inner side 70b. Said toggle button part 70 has a fully circumferential edge with an upper edge part 70c, an opposing lower edge part 70d and opposing lateral edge parts 70e, 70f. According to this embodiment, said fully circumferential edge is arranged so as to fit externally around module elements formed by respective adjacent upper and lower module parts 30, 40. Said toggle button part 70 has a shaft of rotation 72 running on the internal side 70b between said lateral side parts 70e, 70f.

Said shaft of rotation 72 is intended to be rotatably supported in said arched recesses 35, 45 arranged in said left wall part 30a, 40c and right wall part 30 d, 40d of respective upper and lower module parts 30, 40.

According to one alternative variant (not shown), a shaft of rotation is in the form of a projection running between/of said upper and lower module parts and an arched configuration of the toggle button part, wherein the toggle button part is arranged so as to be rotatably supported on said shaft of rotation in that the arched configuration rests on the shaft of rotation of said module parts. Any suitable connection between a toggle button part and a module part/module unit to enable said rotation of the toggle button part to activate activating devices [sic].

Said button part 60 is designed so that adjacent button parts essentially abut one another in order to thus give an impression that essentially looks the same as said toggle button part 70.

The switch configuration S further comprises means for facilitating movements of said toggle button part transverse to the shaft of rotation of the toggle button part. According to one embodiment of the switch configuration S, said means comprise a friction-reducing configuration between said activating device 20 and the interior of the toggle button part.

According to this embodiment of the switch configuration S, said friction-reducing configuration comprises rolling elements 27, 28 arranged on said activating element 20. According to this embodiment, said rolling elements 27, 28 are arranged in connection to the edge part of the activating device that is intended to be turned toward the lower edge part 30b of an upper module part 30 or the upper edge part 40b of a lower module part 40. Said rolling elements 27, 28 according to this embodiment are consequently intended to be disposed in proximity to said shaft of rotation 72.

Said means for facilitating movements of said toggle button part 70 transverse to the shaft of rotation of the toggle button part 70 can consist of any suitable means, such as friction-reducing lubricating means arranged in connection between the activating device 20 and the inner side of the toggle button part 70b. According to one variant, said means for facilitating movement of said toggle button part 70 transverse to the shaft of rotation of the toggle button part include a rounded shape of the activating device and/or the inner side of the toggle button part to reduce friction.

## Claims

1. A switch configuration (S) comprising at least two switch units (10), each of which is arranged so as to achieve a switch function, wherein each respective switch unit (10) comprises an activating device (20) arranged to perform said switch function and to be push-actuated by means of a control device (60, 70), wherein each respective activating device (20) is displaceably arranged in a module part (30, 40) and arranged so as to support and be actuated by means of a first type of control device (60) and to be actuated by means of a second type of control device (70) arranged so as to actuate activating devices (20) in two adjacent switch units (10), wherein said module part (30, 40) is arranged so as to support said second type of control device (70), **characterised in that** said first type of control device (60) comprises a button part (60) arranged on the activating device (20) to form a pushbutton and wherein said second type of control device (70) comprises a toggle button part (70) mounted on the module part (30, 40) to form a toggle button.

2. A switch configuration according to claim 1, wherein each activating device (20) is controlled displaceably in said module part (30, 40).

3. A switch configuration according to claim 1 or 2, wherein said button part (60) is designed as a cap arranged so as to be fastened to said activating device (20).

4. A switch configuration according to claim 1 or 2, wherein said toggle button part (70) is articulated and rotatably connected around a shaft of rotation (72) with said module part (30, 40) between said activating devices (20) of the two adjacent switch units (10).

5. A switch configuration according to claim 4, wherein means (27, 28) are present to facilitate movements of said toggle button part (70) transverse to the shaft of rotation (72) of the toggle button part (70).

6. A switch configuration according to claim 5, wherein said means (27, 28) comprise a friction-reducing configuration (27, 28) between said activating devices and the interior of the toggle button part.

7. A switch configuration according to claim 6, wherein said friction-reducing configuration comprises rolling elements (27, 28) arranged on said activating device.

8. A switch configuration according to any of claims 1-7, further comprising a module unit (50) containing a plurality of pairs of adjacent switch units (10).

## Patentansprüche

1. Schalterkonfiguration (S) mit zumindest zwei Schalteinheiten (10), von denen jede dazu angeordnet ist, eine Schaltfunktion zu erzielen, wobei jede zugehörige Schalteinheit (10) eine Aktivierungseinrichtung (20) aufweist, die dazu angeordnet ist, die Schaltfunktion auszuführen und mittels einer Steuereinrichtung (60, 70) druckbetätigt zu werden, wobei jede zugehörige Aktivierungseinrichtung (20) verlagerbar in einem Modulteil (30, 40) angeordnet und dazu angeordnet ist, eine erste Art von Steuereinrichtung (60) zu lagern und durch sie betätigt zu werden, und mittels einer zweiten Art von Steuereinrichtung (70) betätigt zu werden, welche dazu angeordnet ist, Aktivierungseinrichtungen (20) in zwei nebeneinanderliegenden Schalteinheiten (10) zu betätigen, wobei das Modulteil (30, 40) dazu angeordnet ist, die zweite Art von Steuereinrichtung (70) zu lagern,
**dadurch gekennzeichnet, dass** die erste Art von Steuereinrichtung (60) ein Tastenteil (60) aufweist, das zum Bilden eines Druckknopfes auf der Aktivierungseinrichtung (20) angeordnet ist, und dass die zweite Art von Steuereinrichtung (70) ein Kippschalterteil (70) aufweist, welches zum Bilden eines Kippschalters auf dem Modulteil (30, 40) angebracht ist.

2. Schalterkonfiguration nach Anspruch 1, bei der jede Aktivierungseinrichtung (20) in dem Modulteil (30, 40) verlagerbar gesteuert ist.

3. Schalterkonfiguration nach Anspruch 1 oder 2, bei der der Tastenteil (60) als eine Kappe ausgeführt ist, die dazu vorgesehen ist, an der Aktivierungseinrichtung (20) befestigt zu werden.

4. Schalterkonfiguration nach Anspruch 1 oder 2, bei der der Kippschalterteil (70) angelenkt und um eine Drehwelle (72) herum drehbar mit dem Modulteil (30, 40) zwischen den Aktivierungseinrichtungen (20) der zwei nebeneinanderliegenden Schalteinheiten (10) verbunden ist.

5. Schalterkonfiguration nach Anspruch 4, bei der Mittel (27, 28) vorhanden sind, um Bewegungen des Kippschalterteils (70) quer zur Drehwelle (72) des Kippschalterteils (70) zu erleichtern.

6. Schalterkonfiguration nach Anspruch 5, bei der die Mittel (27, 28) eine reibungsmindernde Struktur (27, 28) zwischen den Aktivierungseinrichtungen und dem Inneren des Kippschalterteils umfassen.

7. Schalterkonfiguration nach Anspruch 6, bei der die reibungsmindernde Struktur auf der Aktivierungseinrichtung angeordnete Rollelemente (27, 28) umfasst.

8. Schalterkonfiguration nach einem der Ansprüche 1 bis 7, ferner umfassend eine Moduleinheit (50), die mehrere Paare aneinander angrenzender Schalteinheiten (10) enthält.

## Revendications

1. Configuration de commutateur (S) comprenant au moins deux unités de commutateur (10), dont chacune est agencée de manière à réaliser une fonction de commutateur, dans laquelle chaque unité de commutateur respective (10) comprend un dispositif d'activation (20) agencé pour réaliser ladite fonction de commutateur et pour être actionné par poussée au moyen d'un dispositif de commande (60, 70), dans laquelle chaque dispositif d'activation respectif (20) est agencé de manière déplaçable dans une partie de module (30, 40) et agencé de manière à supporter et à être actionné au moyen d'un premier type de dispositif de commande (60) et à être actionné au moyen d'un second type de dispositif de commande (70) agencé de manière à actionner des dispositifs d'activation (20) dans deux unités de commutateur adjacentes (10), dans laquelle ladite partie de module (30, 40) est agencée de manière à supporter ledit second type de dispositif de commande (70), **caractérisée en ce que** ledit premier type de dispositif de commande (60) comprend une partie bouton (60) agencée sur le dispositif d'activation (20) pour former un bouton-poussoir et dans laquelle ledit second type de dispositif de commande (70) comprend une partie bouton à bascule (70) montée sur la partie de module (30, 40) pour former un bouton à bascule.

2. Configuration de commutateur selon la revendication 1, dans laquelle chaque dispositif d'activation (20) est commandé de manière déplaçable dans ladite partie de module (30, 40).

3. Configuration de commutateur selon la revendication 1 ou 2, dans laquelle ladite partie de bouton (60) est conçue comme un capuchon agencé de manière à être fixé sur ledit dispositif d'activation (20).

4. Configuration de commutateur selon la revendication 1 ou 2, dans laquelle ladite partie de bouton à bascule (70) est articulée et connectée de manière rotative autour d'un arbre de rotation (72) avec ladite partie de module (30, 40) entre lesdits dispositifs d'activation (20) des deux unités de commutateur adjacentes (10).

5. Configuration de commutateur selon la revendication 4, dans laquelle des moyens (27, 28) sont présents pour faciliter les mouvements de ladite partie de bouton à bascule (70) transversalement à l'axe de rotation (72) de la partie de bouton à bascule (70).

6. Configuration de commutateur selon la revendication 5, dans laquelle lesdits moyens (27, 28) comprennent une configuration de réduction de frottement (27, 28) entre lesdits dispositifs d'activation et l'intérieur de la partie de bouton à bascule.

7. Configuration de commutateur selon la revendication 6, dans laquelle ladite configuration de réduction de frottement comprend des éléments de roulement (27, 28) agencés sur ledit dispositif d'activation.

8. Configuration de commutateur selon l'une quelconque des revendications 1 à 7, comprenant en outre une unité de module (50) contenant une pluralité de paires d'unités de commutateur adjacentes (10).
